# EUROPEAN PATENT APPLICATION

(11) **EP 2 259 400 A2**
(43) Date of publication of application: **08.12.2010**
(21) Application number: 10163891.4
(22) Date of filing: 26.05.2010
(51) Int. Cl.: H02G 3/12

(54) **Electrical installation box and method for installing electrical installation box**

(30) Priority: 01.06.2009 FI 20095608
(71) Applicant: Pajunpää, Tomi, 67700 Kokkola (FI); Känsäkangas, Jukka, 67700 Kokkola (FI); Hänninen, Jyrki, 67700 Kokkola (FI)
(72) Inventor: Pajunpää, Tomi, 67700 Kokkola (FI); Känsäkangas, Jukka, 67700 Kokkola (FI); Hänninen, Jyrki, 67700 Kokkola (FI)
(74) Representative: Kinnunen, Kari Tapio

(57) **Abstract**

An electrical installation box(100) comprising a lead-through collar (106) to be set into an opening (142) made into a surface structure (140) from the direction of the rear surface of the surface structure (140), one or more temporary fastening means (110, 112) connected to the lead-through collar (106), the temporary fastening means being arranged to bend towards the centre axis of the lead-through collar, when the lead-through collar is being placed to the surface structure and the temporary fastening means being arranged to attach to the front side of the surface structure (140) when the lead-through collar (106) has been installed into the opening (142) made into a surface structure (140), and one or more fastening spaces for receiving the actual fastening means.

## Description

### FIELD

The invention relates to an electrical installation box to be installed to a structure, and to a method for installing an electrical installation box.

### BACKGROUND

An electrical installation box is typically installed to a wall or ceiling board of building. After the installation an electrical appliance, such as a plug socket or a lighting switch, may be coupled to the box.

A known method of installing electrical installation boxes in buildings is to fix the box to a frame, such as a partition wall frame, of the building. Next, the position of the box in wall is measured and a lead-through for the box is made in the wall. A problem with prior art solutions such as this is that the measuring requires a considerable amount of working time.

Prior art also knows electrical installation boxes that may be installed by means of special additional parts, known as feet, without frame attachment. A problem with these solutions is the costs arising from the additional parts and their installation.

### SUMMARY OF THE INVENTION

An object of the invention is therefore to provide a method and equipment implementing the method to allow the above problems to be solved. The object of the invention is achieved by a method and system characterized by what is stated in the independent claims. The preferred embodiments of the invention are disclosed in the dependent claims.

An advantage of the method and system is that it enables an easy installation of an electrical installation box without precise determining of the position of the box being required. In the solution of the invention it is sufficient that that an opening in a surface structure is made approximately at the correct location, and during installation the box, which is not fixedly attached to the frame, may be brought to the opening in the surface structure. Hence the solution of the invention avoids time-consuming measuring work aimed at ensuring that the electrical box falls precisely on the right position.

The solution of the invention also allows to avoid costs arising from separate parts needed for the attachment.

### BRIEF DISCLOSURE OF THE FIGURES

In the following the invention will be described in greater detail and with reference to preferred embodiments and the accompanying drawings, in which
Figure 1 illustrates the mounting of an electrical installation box system;
Figure 2 shows the installation of an electrical installation box to a surface structure before a protective cover is attached;
Figure 3 shows the installation of an electrical installation box to a surface structure with a protective cover installed in place;
Figure 4 shows an embodiment of a protective cover; and
Figure 5 shows an embodiment of a temporary fixing means.

### DESCRIPTION OF EMBODIMENTS

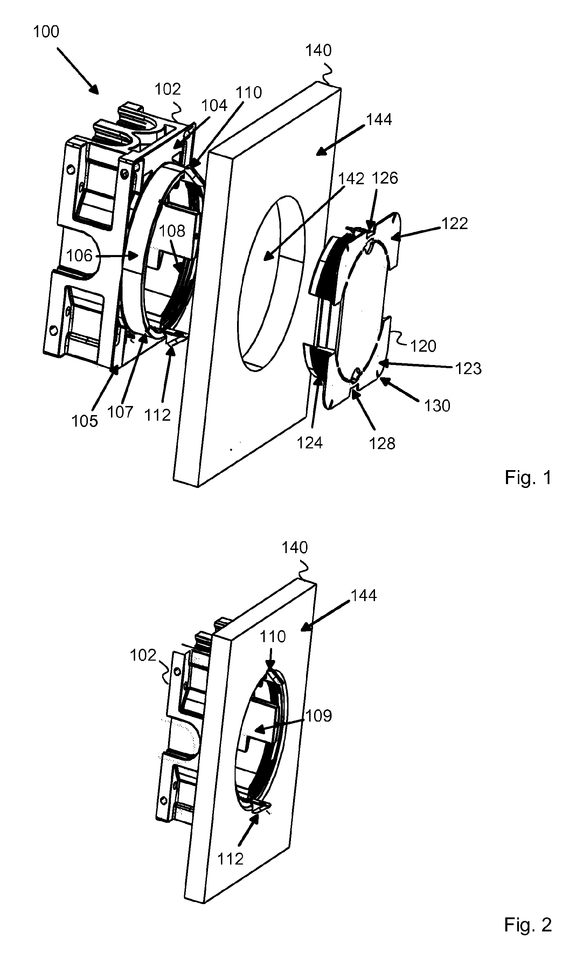

Figure 1 illustrates a structure of an electrical installation box and installation to a surface structure. In this context the term "surface structure" is used to refer to a wall, ceiling or floor structure of a building, into which a box is installed at least partly embedded. The term "electrical installation box" is used here to refer to an installation space or base for an electric appliance or fixture. The appliance or fixture may be an electrical switch, electric plug socket, light control switch or some other control, measurement and/or actuator unit.

In buildings where wall and roof structures are built on support structures, electrical installations are usually carried out at an intermediate phase before mounting a surface structure. Figure 1 shows a surface structure 140 provided with an opening 142 for an electrical installation box 100. In the Figure reference number 144 indicates the front surface, i.e. the one facing the room, of the surface structure. The board surface facing the opposite direction is here called the rear surface.

When the necessary electrical installations to the electrical installation box 100 have been completed, i.e. lead-throughs have been made and cable clamps installed, the installation of the box to the surface structure may begin. As shown in the Figure, the electrical installation box 100 is installed to the surface structure 140 from the rear surface side. An installation part 102 belonging to the box 100 and having lead-throughs for electrical wiring sets onto the rear surface side of the surface structure when in use. The electrical installation box further includes a lead-through collar 106 that sets into the opening made in the surface structure 140. The dimensioning of the opening substantially corresponds to the outer diameter of the outer surface in a way that allows the opening in the surface structure to receive the lead-through collar but without leaving unnecessarily large gap between them.

In its length, i.e. in a direction perpendicular to the surface structure surface, the lead-through collar is substantially equal to the thickness of the surface structure, preferably slightly less than the thickness of the surface structure. A typical surface structure thickness used is 13mm, in which case the lead-through collar may be 11 mm thick, for example. Surface structures of different thicknesses may be equipped with different kinds of appliance boxes where the length of the lead-through collar has been dimensioned according to the thickness of the partition wall.

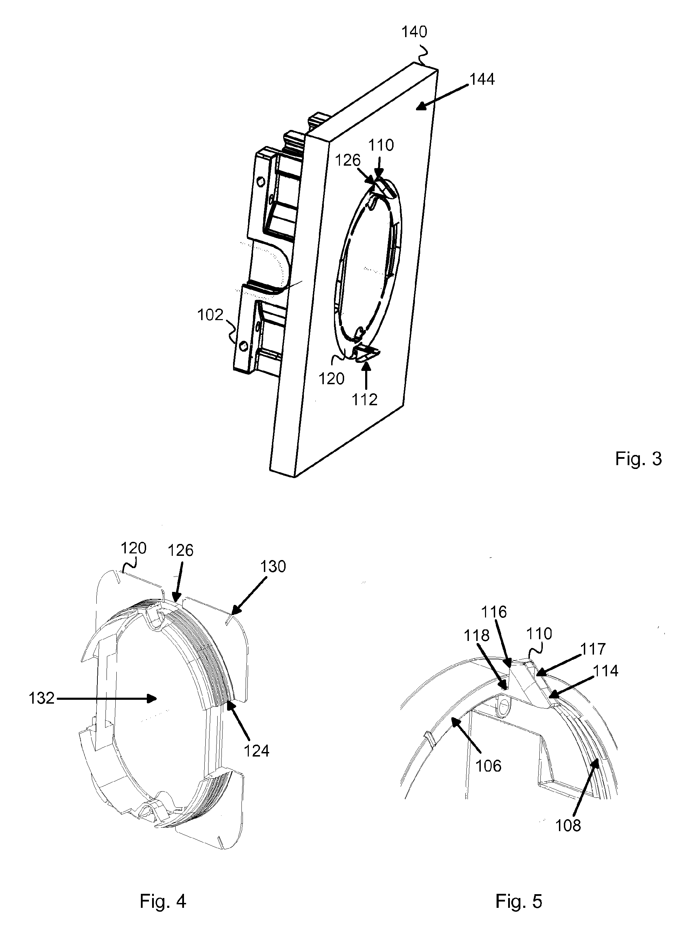

Further, the electrical installation box 100 is provided with one or more temporary fixing means for grabbing the front surface of the surface structure. In Figure 1 these temporary fixing means are represented by gripping claws 110, 112 arranged on opposite sides of the lead-through collar. They will be described in greater detail in connection with Figure 3. In Figure 1 the distance of between the tips of the gripping claws 110, 112 is slightly smaller than the diameter of the opening in the lead-through collar.

When being installed in place, the electrical installation box is pushed from the rear surface side of the surface structure to the front side so that the lead-through collar sets into the opening made in the surface structure and a support surface 104 of the installation part 102 becomes pressed against the rear surface of the board. When being pushed into the opening, the stem part of the gripping claws may yield slightly inward through the middle part of the lead-through collar. When the lead-through collar has penetrated the opening entirely, the gripping surface of the gripping claws passes by the front surface of the surface structure, thus forming a grip on the front surface, whereby the electrical installation box remains in the surface structure opening by itself. When the box sets into place the gripping claws that yielded in the installation phase are allowed to return to their original position.

With the electrical installation box in place in the opening and the temporary fixing means in gripping position on the front side of the surface structure, the box may be fastened with actual fastening means on the front side of the surface structure. According to an embodiment the actual fastening means comprise a protective cover 120 that may be installed in the direction from the front surface 144 of the surface structure. The protective cover is provided with fastening means 124 for interlocking with the fastening means 108 in the lead-through collar. According to an embodiment the fastening means of the protective cover and the lead-through collar are furrows which when pressed one inside the other form an interlocking. The protective cover is also provided with a support surface 122 that presses against the front surface 144 of the surface structure during operation, thereby supporting the fastening of the electrical installation box to the surface structure. In addition, the protective cover is provided with receiving openings 126, 128 for receiving temporary fastening means to allow the protective cover to be locked in place in the lead-through collar when the temporary fastening means 110, 112 are in place in the surface structure. The receiving openings are provided with a support surface, which is arranged to support the temporary fastening means so that they cannot bend inwards towards the centre of the protective cover, when the protective cover is pushed in place into the lead-through collar 106.

The support surface 122 of the protective cover may be discontinuous as in Figure 1, where the support surface has a continuous upper part 122 and a continuous lower part 123 and, between these, a control surface 129 forms on both sides. During installation, the control surface is arranged to set against a control means 109 provided in the electrical installation box 100. This allows ensuring that the protective cover 120 and the box 100 occupy a desired predetermined position in relation to one another.

With the protective cover in place, attached to the rest of the electrical installation box, the temporary fastening means may be detached by turning with a screw driver, for example.

In the above description the protective cover is fastened to the lead-through collar, which is followed by the actual, i.e. final, fastening of the electrical installation box in its place by means of the protective cover. However, the use of a protective cover is not indispensable but it is also possible to use screws for the actual fastening. Figure 1 shows a groove 107 formed in the lead-through collar 106 and indicating the position of a screw attachment on the electrical installation box. With the box pushed through the surface structure, the groove 107 in the lead-through collar 106 is visible to the front side of the surface structure. The groove indicates to the electrician that the screw attachment is to be made at a point on the wall outside the lead-through collar, precisely at the location indicated by the groove 107. At a corresponding location in the installation part 102 of the electrical installation box there is a fastening space 105 for the screw. In practice the fastening space may be a wall behind the support surface 104 of the installation part 102, for example, meaning that the screws may be screwed to the mounting part wall through the support surface 104. The shape of the installation part may be square or rectangular, for example, in which case the support surface surrounds during the operation an opening formed in the surface structure, the box thus providing fastening spaces for the screws at all its corners, for example. The fastening spaces in the installation parts have been arranged to locations where the screws to be received do not impair electrical installations.

It is also possible to fasten the electrical installation box by means of both the protective cover and the screws. With the protective cover pressed in place and the locking means 124 of the cover interlocked with the corresponding locking members 108 of the lead-through collar, the electrical installation box may be further fastened by a screw from the wall immediately outside the cover at a location indicated by the screw attachment points 130. The installation part 102 of the electrical installation or appliance box may be provided with wall structures at corresponding locations for receiving screws.

The electrical installation box of Figure 1 comprises two parts to be interconnected. A first part has an installation part, a lead-through collar and gripping claws. A second part, a protective cover, may be attached to the first part. The first part is preferably a single cast piece made of plastic, for example. Hence temporary fastening means, such as the gripping claws, are an integral part of the electrical installation box.

Figure 2 illustrates the installation of the electrical installation box before the installing of the protective cover. As seen in the Figure, the lead-through collar of the box 100 is pushed through an opening in the surface structure 140. Temporary fastening means 110, 112 connected to the lead-through opening are set so that their gripping surface rests against the front surface 144 of the surface structure, thus preventing the box from sliding back to the back of the surface structure.

Figure 3 illustrates the installation of an electrical installation box when the box is attached with actual fastening means, which in Figure 3 means the protective cover 120. As the Figure shows, temporary fastening means 110 and 112 set into reception means 126 and 128 provided in the protective cover and rest against their support surfaces so that the inward bending of the temporary fastening means towards the centre of the protective cover is prevented when the protective cover is being installed in place.

Figure 4 shows the protective cover from the back. The protective cover includes actual fastening means 124 for interlocking with the lead-through collar of the electrical installation box. According to an embodiment the fastening means 124 are provided in the form of a furrow that may be pressed into a furrow in the lead-through collar for interlocking. Instead of a furrow with multiple grooves the fastening means may also be an individual protrusion, such as a projection or shoulder, in a locking collar of the protective cover, which attaches to a corresponding protrusion in the lead-through collar. The protective cover further includes a middle part 132, which is detachable from the rest of the protective cover, the protective cover being locked in place in the electrical installation box. In other words, a frame part without the middle part remains attached to the installation box, despite the detachment of the middle part, and performs the necessary locking. When the middle part has been detached, the gripping claws may be cut and an electrical appliance may be mounted to into the installation box.

In Figure 4 the support surface 126A of the reception opening 126 is visible, the surface being arranged to prevent the inward bending of the temporary fastening means, when the protective cover is being pushed in place. This ensures that the installation box does not return to the back of the surface structure but stays in place in an opening made in the surface structure.

When the electrical installation box has been installed in place with the actual fastening means, such as the protective cover and/or screws, the temporary fastening means may be detached.

Figure 5 illustrates the structure of a temporary fastening means 110. The temporary fastening means is preferably manufactured by casting it as an integral piece with the electrical installation box 100 so that the fastening means is fixedly attached to lead-through collar 106 of the box. As seen in the figure, at the point of attachment of the temporary fastening means the lead-through collar may be discontinuous. For example, the lead-through collar may be provided with a substantially rectangular opening, to which the stem part of the fastening means is embedded. This prevents the lateral movement of the stem part and the structure becomes mechanically strong.

The fastening means is provided with a gripping surface 116, which is substantially perpendicular to the longitudinal direction of the lead-through collar, i.e. when in use the gripping surface sets substantially in the direction of the surface of the surface material. The stem part 118 of the temporary fastening means of Figure 5 links the other parts of the lead-through collar 106 and the fastening means 110. Instead of being embedded in the lead-through collar as shown in Figure 5, the stem part may also be attached to an end of the lead-through collar. The stem part 118 is preferably flexible in a way that allows it to be bent towards the middle part of the lead-through collar 106, when the lead-through collar is pushed trough the opening in the surface material.

The fastening means may also be provided with a guide part 114 arranged at an angle to the longitudinal direction of the lead-through collar. The angle may be 45 degrees, for example. The guide part, alone or together with the flexible stem part 118, facilitates the pushing of the fastening means through the opening in the surface material. As seen in the Figure, the guide part may rounded to make it easier to push through the opening.

The fastening means may also be provided with a detachment dent 117 for easy detachment of the fastening means from the electrical installation box, when the box is pushed in place and attached by the actual fastening means. The detaching may be carried out for example by pushing a screw driver into the detachment dent and rotating the screw driver clockwise and counter-clockwise. As shown in Figure 5, the stem part may have a narrowing cross-section, the stem part being thickest at the fastening means end and thinnest at the lead-through collar end. At the lead-through end the stem part may be attached close to the opening of the lead-through collar.

The lead-through collar of the electrical installation box may be provided with one or more temporary fastening means connected thereto. Preferably at least two temporary fastening means are provided, and they may be placed to opposite sides of the lead-through collar. It is also possible to have more than two fastening means. The temporary fastening means are preferably located on the periphery of the lead-through collar at regular intervals.

The invention does not restrict the width of the temporary fastening means. From a casting technological point of view an optimal range for each fastening means is about 5 to 40 degrees of the peripheral circumference, but some other width may be considered as well.

The protective cover belonging to the electrical installation box comprises locking means for locking the lead-through collar installed in the opening formed in the surface structure and with one or more temporary fastening means attached to the front side of the surface structure. The locking means of the protective cover may comprise a locking collar having one or more protrusions substantially transverse to the direction of propagation of the locking collar for locking to a corresponding protrusion on the inner surface of the lead-through collar.

According to an embodiment the temporary fastening means comprises a gripping surface that sets perpendicularly to the longitudinal direction of the lead-through collar for attachment to the front side of the surface structure.

According to an embodiment the temporary fastening means comprises a flexible stem part for bending the temporary fastening means towards the centre axis of the lead-through collar, when the box is being installed in the opening provided in the surface structure. In this context the centre axis refers to a straight line parallel with the lead-through collar and the running through the centre part of thereof. The temporary fastening means is arranged to return to a substantially non-bending state, when the temporary fastening means has traversed the opening in the plane part of the surface structure. The temporary fastening means thus forms an attachment to the surface structure.

According to an embodiment the temporary fastening means comprises an oblique guide surface in relation to the longitudinal direction of the lead-through collar for guiding the fastening means through the opening in the surface structure. The angle of the guide surface to the direction of the longitudinal axis of the lead-through collar may be about 45 degrees, for example, although it may also be some other angle between 0 and 90 degrees.

The guide surface and the flexible stem together, or separately, facilitate the pushing of the fastening means through the opening in the surface structure.

According to an embodiment the lead-through collar of the electrical installation box and one or more temporary fastening means are fixedly connected, i.e. manufactured into a uniform piece. According to an embodiment the box comprising an installation part, lead-through collar and temporary fastening means form a uniform casting. In practice other parts of the electrical installation box except for the protective cover may form one and the same casting.

According to an embodiment the fastening of the temporary fastening means to the lead-through collar has been made lighter to allow the fastening means to be easily removed when the electrical installation box has been installed in place into the opening in surface structure. The stem part of the fastening means may be conical, for example, its narrowest part being at the joint between the stem part and the lead-through collar. The stem part of the fastening means thus sustains longitudinal traction and bending fairly well but breaks easily when the fastening means is turned.

The installation part of the electrical installation box preferably comprises a support surface for arrangement against the rear surface of the surface structure when the lead-through part has been installed into the opening in the surface structure. When the box has been installed into the opening in the surface structure, it is supported from the back by the support surface of the installation part, the surface structure opening, which sets against the outer surface of the lead-through collar and temporary fastening means, which support the electrical installation box from the front side of the surface structure.

According to an embodiment one or more fastening spaces are provided in the installation part for receiving the fastening means when the electrical installation box has been installed into the opening in the surface structure. The fastening spaces may consist of the walls of the installation space so that they allow the box to be fastened by means of screws, for example, through the wall from the outside of the opening in the surface structure. The number of fastening spaces in the box may be freely chosen, although according to an embodiment there are at least four of them so that the box may be fastened at each corner by a screw.

According to an embodiment the fastening space for the actual fastening means comprises an inner space determined by the lead-through collar. The inner surface of the lead-through collar may be provided with furrows or grooves that may receive corresponding fastening means provided in the protective cover.

According to the method the lead-through collar of the electrical installation box is pushed through the opening in the surface structure so that the temporary fastening means attach to the front side of the surface structure. When the lead-through collar is pushed through the opening in the surface structure, the temporary fastening means bend towards the centre axis of the lead-through collar. When the plane of the temporary fastening means, which s arranged to attach to the front side of the surface structure, has traversed the opening in the surface structure, the temporary fastening means returns from its bent state to the normal state, thus forming an attachment to the surface structure.

Since the length of the lead-through collar has been dimensioned to be substantially equal in thickness with the surface material and since the diameter of the opening is dimensioned to be substantially equal to the outer diameter of the lead-through collar, the box thus installed sets tightly into the opening in the surface structure.

When the electrical installation box has been preliminarily installed with the temporary fastening means, the box may be fastened with the actual fastening means.

According to an embodiment, fastening with the actual fastening means comprises pushing the protective cover into the lead-through collar of the electrical installation box from the front side so that the protective cover and the lead-through collar of the electrical installation box become interlocked and the protective cover sets against the front side of the surface structure. With the protective cover locked to the installation box, the centre part of the protective cover may be removed, thus allowing an electrical appliance to be installed into the installation box. After the removal of the centre part the protective cover remains still locked to the installation box through furrows or the like and, on the other hand, the support surfaces of the protective cover rest against the front side of the surface structure, thus preventing for their part the installation box from escaping to the back of the surface structure.

According to another embodiment fastening with the actual fastening means comprises the fastening of the electrical installation box through the surface structure from the front side of the surface structure into installation spaces provided in the installation part.

When the installation box has been fastened with the actual fastening means, the temporary fastening means may be removed. A temporary fastening means may comprise a detachment dent for detaching the temporary fastening means when the electrical installation box has been fastened with the actual fastening means.

According to an embodiment the actual fastening means comprise a protective cover, which is fastened to the lead-through collar from the front side of the surface structure. According to an embodiment the protective cover comprises a guide space and surface for receiving the guide means provided in the lead-through collar. This allows ensuring that the protective cover may be installed into the installation box in a specific position only.

According to an embodiment, when the protective cover is being fastened to the lead-through collar of the electrical installation box, a protrusion provided in the locking collar of the protective cover is pushed being a protrusion provided in the lead-through collar for locking the locking collar to the lead-through collar. Instead of a single protrusion, both may be provided with furrows or a similar fastening mechanism for fastening them together.

According to an embodiment the electrical installation box may be fastened, in addition to or instead of the protective cover, by means of screws to the lead-through collar from the front side of the surface structure of the installation part and/or from locations indicated by markings on the protective cover from outside of the protective cover or an immediate vicinity thereof. Screws form reception spaces into the installation part of the electrical installation box, the installation part resting against the rear surface of the surface structure during use.

A person skilled in the art will find it apparent that as technology advances the basic idea of the invention may be implemented in various ways. The invention and its embodiments are therefore not restricted to the above examples but they may vary within the scope of the claims.

## Claims

1. An electrical installation box, **characterized in that** the electrical installation box (100) comprises:
a lead-through collar (106) arranged to be set into a round opening (142) made into a surface structure (140) from the direction of the rear surface of the surface structure (140);
one or more temporary fastening means (110, 112) connected to the lead-through collar (106), the temporary fastening means (110, 112) being arranged to bend towards the centre axis of the lead-through collar (106), when the lead-through collar (106) is being placed to the surface structure (140) from the direction of the rear surface of the surface structure (140), the temporary fastening means (110, 112) being arranged to attach to the front side (144) of the surface structure (140) when the lead-through collar (106) has been installed into the round opening (142) made into a surface structure (140);
one or more fastening spaces (105, 108) for receiving the actual fastening means (120) when the temporary fastening means (110, 112) are fastened to the front side (144) of the surface structure (140); and
the temporary fastening means (110, 112) are arranged to be detachable when the electrical installation box has been attached by the actual fastening means (120).

2. An electrical installation box according to claim 1, **characterized in that** the temporary fastening means (110, 112) comprises a gripping surface (116) for attachment to the front side (144) of the surface structure (140) arranged substantially perpendicularly to the longitudinal direction of the lead-through collar (106).

3. An electrical installation box according to claim 1, **characterized in that** the temporary fastening means (110, 112) comprises an oblique guide surface (114) in relation to the longitudinal direction of the lead-through collar (106) for guiding the temporary fastening means (110, 112) through the opening (142) in the surface structure (140).

4. An electrical installation box according to claim 1, **characterized in that** the temporary fastening means (110, 112) comprises a stem part (118), the stem part (118) being conical, for example, its narrowest part being at the joint between the stem part (118) and the lead-through collar (106).

5. An electrical installation box according to claim 1, **characterized in that** the temporary fastening means (110, 112) comprises a detachment dent (117) for receiving the tip of a screw driver, for example, for detaching the temporary fastening means (110, 112),when the electrical installation box has been fastened with the actual fastening means (120).

6. An electrical installation box according to claim 1, **characterized in that** the distance between the tips of the temporary fastening means (110, 112) is smaller than the diameter of the round opening made to the surface structure.

7. An electrical installation box according to claim 1, **characterized in that** the lead-through collar (106) of the electrical installation box and one or more temporary fastening means (110, 112) form a uniform casting.

8. An electrical installation box according to claim 1, **characterized in that** the electrical installation box comprises an installation part (102), the installation part (102) comprising a support surface (104) arranged to set against the rear surface of the surface structure (140), when the lead-through collar (106) has been installed into the opening (142) in the surface structure (104), and the installation part (102) comprising a wall structure connected to he support surface (104), the wall structure being arranged to form a fastening space (105) at a section of the installation part that remains on the rear side of the surface structure.

9. An electrical installation box according to claim 1, **characterized in that** the fastening space (124) for receiving the actual fastening means comprises an inner space of the lead-through collar (106).

10. An electrical installation box according to claim 1, **characterized in that** one or more actual fastening means comprises a protective cover (120), which comprises locking means for interlocking with lead-through collar (106), when the lead-through collar (106) has been installed into the opening (142) made into the surface structure (140) and when one or more temporary fastening means are fastened to the front side (144) of the surface structure (140).

11. An electrical installation box according to claim 10, **characterized in that** the protective cover comprises a support surface (122), which is arranged to set against the front surface of the surface structure, the support surface (122) being provided with one or more openings (126, 128) for the temporary fastening means (110, 112) to set into.

12. An electrical installation box according to claim 10, **characterized in that** the protective cover comprises a detachable centre part when the protective cover is interlocked with the lead-through collar, thus allowing an electrical appliance to be installed into the installation box.

13. An electrical installation box according to claim 10, **characterized in that** the protective cover (120) and the lead-through collar (106) comprise furrows and when pressed one inside the other the furrows form an interlocking.

14. An electrical installation box according to claim 10, **characterized in that** the protective cover (120) comprises a guide surface (129) arranged to set against a guide means (109) provided in the lead-through collar (106) so that the protective cover (120) and the lead-through collar (106) set into a predetermined desired position in relation to one another.

15. A method for installing an electrical installation box into a surface structure, **characterized by**
pushing a lead-through collar (106) of the electrical installation box into a round opening (142) made into the surface structure (140) from the direction of the rear surface of the surface structure, whereby temporary fastening means connected to the lead-through collar (106) bend towards the centre axis of the lead-through collar, and the temporary fastening means attach to the front side (144) of the surface structure (140) when the lead-through collar has been installed into the round opening made into a surface structure;
fastening the electrical installation box (106) with one or more actual fastening means when the temporary fastening means (110, 112) are fastened to the front side (144) of the surface structure (140); and
detaching the temporary fastening means (110, 112) when the electrical installation box has been attached by the actual fastening means (120).
